Europäisches Patentamt

European Patent Office

Office européen des brevets

(19)

(11) Publication number: **0 025 664**
**B1**

## EUROPEAN PATENT SPECIFICATION

(45) Date of publication of patent specification: **21.03.84**

(21) Application number: **80303050.1**

(22) Date of filing: **02.09.80**

(51) Int. Cl.³: **G 03 B  27/58,**
**G 03 G  15/00**

(54) Copy sheet counting device for copying apparatus.

(30) Priority: **03.09.79 JP  113213/79**

(43) Date of publication of application:
**25.03.81 Bulletin 81/12**

(45) Publication of the grant of the patent:
**21.03.84 Bulletin 84/12**

(84) Designated Contracting States:
**DE FR GB**

(56) References cited:
US - A - 3 588 472
US - A - 4 054 380
US - A - 4 130 354
US - A - 4 163 897

IBM TECHNICAL DISCLOSURE BULETIN, vol. 19,
no. 4, September 1976, pages 1154-1156, New
York, U.S.A. J.H. HUBBARD et al.: "Restarting
interrupted copy production"

(73) Proprietor: MITA INDUSTRIAL CO. LTD.
2-28, 1-chome, Tamatsukuri Higashi-ku
Osaka (JP)

(72) Inventor: Motomura, Minoru
Tomio-danchi 2-303, 1-2, Torimi-cho 4-chome
Nara-shi, Nara-ken (JP)
Inventor: Shibata, Kiyoshi
13-73, Tsurumi 3-chome
Tsurumi-ku, Osaka (JP)
Inventor: Watanabe, Toshio
285-32, Okutenjincho 3-chome
Takatsuki-shi, Osaka (JP)
Inventor: Ohata, Yousuke
1-10-4, Nishiura
Habikino-shi, Osaka (JP)

(74) Representative: Kelly, Hubert Francis et al,
J.A. Kemp & Co. 14 South Square Gray's Inn
London WC1R 5EU (GB)

Copy sheet counting device for copying apparatus

The present invention relates to a device for counting copy sheets in a copying apparatus, and more particularly to counting so as to carry out the successive production of a preselected number of multiple copies of an original document despite interruption of the copy run by a paper jam.

In a conventional typical copying apparatus, copy sheets to be fed in a copying step are counted. When the number of copy sheets fed attains a preselected number of copies, the feeding of copy papers is terminated and thus the desired number of copies will be reproduced. Therefore, when a paper jam occurs on a copy sheet transport path before the copying step is complete, the copying step is interrupted. Under these circumstances, a jammed sheet, and any sheet partly transported along the transport path will already have been counted, even though they are removed from the copying apparatus. Then, if the copying step is recommenced in the above-mentioned state, the number of copies delivered will be deficient by the jammed sheet and any other removed sheet. Accordingly, in the prior art systems, when a paper jam is released and the copying step is recommenced, it is necessary to reselect the number of copies.

It is an object of this invention to provide an improved copy sheet counting device for solving the foregoing shortcomings.

It is another object of this invention to provide a device for reproducing the desired number of copies continuously even though the copying step may be recommenced without resetting the number of copies after a paper jam is released.

United States patent specification No. 3,588,472 discloses a logic control apparatus in a copying machine in which two counters are provided, one to count the feed of copy sheets and the other to count the discharge of completed copy sheets. The counters are connected by a reversible counter which is caused to count in one direction by actuation of the feed counter and in the opposite direction by the actuation of the copy counter, this counter being connected to a display to indicate the number of jammed sheets when a jam is detected. The count of the copy counter is transferred to the feed counter in response to actuation of a manual jam restart in order to compensate for lost copies. This mechanism is expensive and complicated and the device of the present invention provides a simplified construction, using two counters only without need for a complicated reversible counter, in which the jam detector is arranged automatically to transfer the count from the copy counter to the feed counter on the occurrence of a jam with the count in the feed counter being displayed so that the change in the count provides an indication to the operator automatically of the number of sheets to be removed from the jam.

United States specification No. 4054380 discloses a copying machine in which a display shows the number of copies selected only when the machine is not in operation and once the machine is operative, or in a jammed condition, the display shows the number of copies as counted by a register actuated by flashing of the originals. Upon a jam occurring the number of copies shown by a delivery register is automatically fed into the copy count register the count of which is shown on the display. No count is provided of the actual number of copy sheets which have been fed, the initial first count being the count obtained from the flashing responsive copy count register; consequently there is no accurate counting of the total number of sheets which may be in the path from the feed magazine to the final delivery location. The present invention provides a simpler construction which, despite being simpler, does give a readily available indication to the operator, regardless as to when during a run a jam occurs, of the number of copy sheets to be removed from the feed path and thus readily assures that the jam has properly and completely cleared.

The invention provides a copy sheet counting device for copying apparatus capable of producing successively a plurality of copies corresponding to an original document comprising: memory means for presetting a number of copy sheets required from an original and for storing the preset number; first counting means for counting the copy sheets being fed, copy sheet feeding means responsive to said first counting means for terminating feed of the copy sheets when the count value of the first counting means is equal to the said preset number; second counting means for counting the copy sheets being discharged after copying thereon; means for detecting a paper jam; and count transfer means for causing the said first counting means to store the count value of the said second counting means; characterised in that the count transfer means is directly responsive to the output from the paper jam detecting means, a display being provided to display the count of said first counting means.

The first counter may be a subtracting counter, subtracting by one unit from the preset number as each copy sheet is fed and the second counter may be a subtracting counter, subtracting by one unit from the preset number as each copy sheet is discharged. The use of a subtracting counter has advantage over the use of adding counters in that the copy set number is displayed at the display station with, in the process of copying, the number of the copies still required being displayed at the display station. This provides a useful ever-present indication to the operator, especially where relatively long copy means are required. Alternatively, although less preferred, the first counter may be an adding counter increasing its count by one unit as each copy sheet is fed; the second counter may be an adding counter, increasing its count by one unit as each copy sheet is discharged; and the count value of the first counter may be compared with the preselected number to ensure that the feed of the copy sheets is terminated when the count value of the first counter is equal to the said preselected number.

In order that the present invention may more readily be understood, the following description is given, merely by way of example, with reference to the accompanying drawings, in which like numerals designate corresponding parts in the Figures, and in which:—

Figure 1 is a block diagram of a preferred embodiment of the invention; and

Figure 2 is a block diagram of another preferred embodiment of the invention.

The following detailed description is of the best presently contemplated mode of carrying out the invention. This description is not to be taken in a limiting sense, but is made for the purpose of illustrating the general principles of the invention defined by the appended claims.

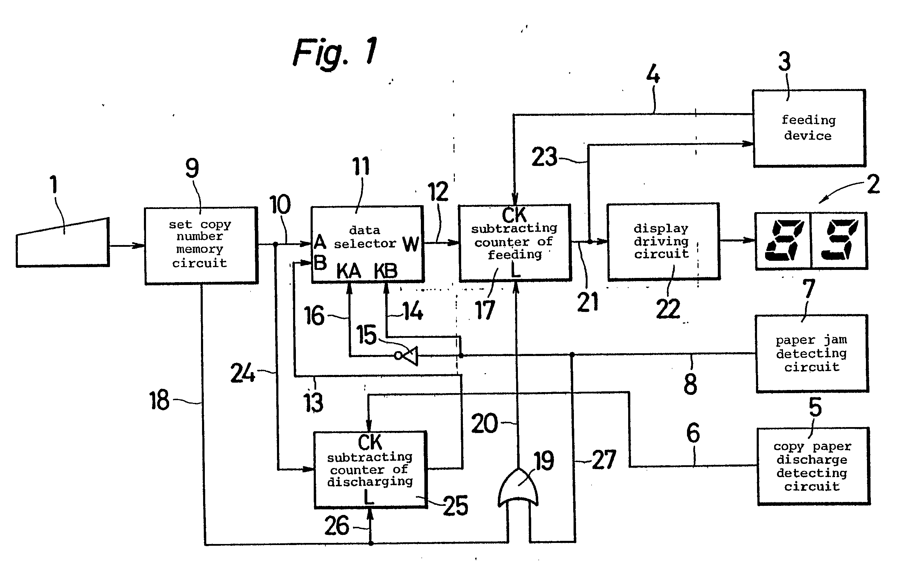

Figure 1 is a block diagram of one embodiment of the invention. When multiple copies are to be reproduced from an original document, a number of copies is selected by pressing copy number selecting means (for example a decimal key 1) after closing a power switch (not shown) of a copying apparatus. Accordingly the selected number of copies is displayed at a display station 2 which comprises display elements for first and second decimal digits.

In a feeding operation, a feeding device 3 provides a single pulse on line 4 whenever each individual copy sheet is fed. When the feeding device 3 receives a low level signal from line 23, the feeding operation is finished, and multiple copies are accomplished.

A copy paper discharge detecting circuit 5 includes a micro switch (not shown) disposed on a copy paper transport path along which a copy sheet is guided after completion of the copying step. Whenever the micro switch detects each copy sheet being discharged, the copy sheet discharge detecting circuit 5 provides a single pulse on line 6.

A paper jam detecting circuit 7 is provided with two micro switches spaced apart along the transport direction of the copy paper transport path. In the event that the micro switch disposed upstream detects the copy paper and then the micro switch disposed downstream does not detect the copy paper after a predetermined time period has elapsed, or in the event that the micro switch disposed downstream maintains its "copy sheet detected" state for longer than a predetermined time period, the paper jam detecting circuit 7 recognises that a paper jam has occurred and provides a high level signal on line 8. Since the paper jam detecting circuit 7 is provided with a reset button (not shown), a low level signal can be applied from the paper jam detecting circuit 7 to line 8 by pressing the reset button after a jammed paper has been removed from the copying apparatus.

By pressing the copy number selecting key 1, the information supplied by the key 1 indicative of the selected number of copies is applied to a set copy number memory circuit 9 and is also applied from the set copy number memory circuit 9 via line 10 to an input terminal A of a data selector 11. The data selector 11 serves to connect terminals A and W when a high level signal is applied to a terminal KA and a low level signal to a terminal KB. The data selector 11 also serves to connect terminals B and W when a low level signal is applied to the terminal KA and a high level signal to the terminal KB. Since the output signal from the paper jam detecting circuit 7 to line 8 is low level when the copy number selecting key 1 is pressed, a low level signal is applied via lines 8 and 14 to the terminal KB and a high level signal is applied on line 16 from line 8 via a NOT gate 15 to the terminal KA. Accordingly line 10 is connected with line 12 via the terminals A and W of the data selector 11, and the information from the set copy number memory circuit 9 is applied via the data selector 11 to charge a subtracting "feed" counter 17. The subtracting "feed" counter 17 serves to store an input value from line 12 when an input signal to a load terminal L is high level. The set copy number memory circuit 9 provides a high level signal on line 18 when the key 1 is pressed, and the high level signal is applied on line 20, via line 18 and an OR gate 19, to the load terminal L of the subtracting "feed" counter 17. Accordingly the preset number of copies is stored in the subtracting feed counter 17 when the key 1 is pressed. The information stored in the subtracting "feed" counter 17 is displayed, as the preset number of copies, at the display station 2 via line 21 and a display driving circuit 22.

The information supplied from the set copy number memory circuit 9 is applied from line 10, via line 24, to a subtracting "discharge" counter 25. The subtracting "discharge" counter 25 serves to store the information from line 24 when the load terminal L receives a high level signal. Since the high level signal is applied from the set copy number memory circuit 9 via lines 18 and 26 to the load terminal L of the subtracting "discharge" counter 25, the information from the set copy number memory circuit 9 is stored in the subtracting "discharge" counter 25.

When a multiple copy operation is commenced by pressing a "print" button (not shown), the feeding device 3 is enabled to feed copy sheets and provides on line 4 the above-mentioned single pulse as every copy sheet is fed.

Whenever this single pulse is applied to a terminal CK of the subtracting "feed" counter 17, the number stored in the subtracting "feed" counter 17 is reduced one by one. Correspondingly the value displayed at the display station 2 is also reduced by one via the display driving circuit 22.

Each time a copy sheet about to be discharged from the copying apparatus is detected after completion of the copying operation, the "discharge" detecting circuit 5 provides the above-mentioned single pulse on line 6. Whenever the terminal CK of the subtracting "discharge" counter 25 receives this pulse, the number stored in the subtracting "discharge" counter 25 is reduced by one. When the number of subtractions made by the subtracting "feed" counter 17 comes equal to the preset number of copies, a low level signal is applied from the subtracting "feed" counter 17 to the feeding device 3 via lines 21 and 23. Correspondingly the feeding device 3 stops feeding copy sheets and the preset number of copies will be reproduced.

Assuming a paper jam occurs on the transport path during multiple copying operation as described above, the paper jam detecting circuit 7 provides on line 8 the high level signal. Therefore the high level signal is applied on line 14 to the terminal KB of the data selector 11, and the low level signal is applied via the NOT gate 15 and line 16 to the terminal KA. Since the terminals B and W of the data selector 11 are thus closed, the line 13 becomes connected with line 12 via the data selector 11. Correspondingly the information stored in the subtracting "discharge" counter 25 is applied via line 13, the data selector 11 and the line 12 to the subtracting "feed" counter 17. When the paper jam occurs, the high level signal is applied to the load terminal L of the subtracting "feed" counter 17 via line 27 shunted from line 8, the OR gate 19 and the line 20. Therefore the information stored in the subtracting "discharge" counter 25 is transferred to and stored in the subtracting "feed" counter 17. Correspondingly the information stored in the subtracting "feed" counter 17 is displayed at the display station 2 via the display driving circuit 22. The value displayed at the display station 2 thus changes, from a value equal to the number of copy sheets still to be fed just before the paper jam occurred, to a value equal to the number of copy sheets to be discharged just before the paper jam occurred.

In brief, when a paper jam occurs, the resultant value in the subtracting "feed" counter 17 is equal to the preset number of copies originally selected on key 1 less the number of copy sheets still to be discharged after completion of any part completed copying operation. This value, stored in the subtracting "feed" counter 17 is displayed at the display station 2.

If two copy sheets are sequentially jammed along the transporting direction of the copy sheet transport path, the value stored in the subtracting "feed" counter 17 becomes increased by "2" with respect to the number at the occasion of the paper jam. Similarly this increased value is displayed at the display station 2.

To release the paper jam, the operator takes a jammed sheet out of the copying apparatus, and in the case where there is another copy sheet partway along the copy sheet transport path, upstream of the sensor of sheet discharge triggering the subtracting "discharge" counter 25, that too is taken out. Then the reset button (not shown) of the paper jam detecting circuit 7 is pressed. Thus the paper jam detecting circuit 7 is reset and the output signal from the paper jam detecting circuit 7, to line 8, returns to the low level. When the output signal supplied from line 8 changes from high level to low level, the data selector 11 closes the terminals A and W and connects line 10 with line 12. On the contrary, since the output signal applied from the set copy number memory circuit 9 to line 18 is now at low level, the information of the set copy number memory circuit 9 does not then become stored in the subtracting "feed" counter 17. The print button (not shown) must also be pressed, after a reset button is pressed, to resume printing. However, the preceding preset number of copies set by the key 1 will, when required, be reproduced without setting a number of copies again (for example in the event of a subsequent jam in the same multiple copy run).

Though, when the paper jam occurs, the stored information of the subtracting "discharge" counter 25 is transferred to the subtracting "feed" counter 17, as above-mentioned, the stored information of the subtracting "discharge" counter 25 is not erased yet and remains stored. Accordingly even though several paper jams may occur it is not necessary to reselect a number of copies.

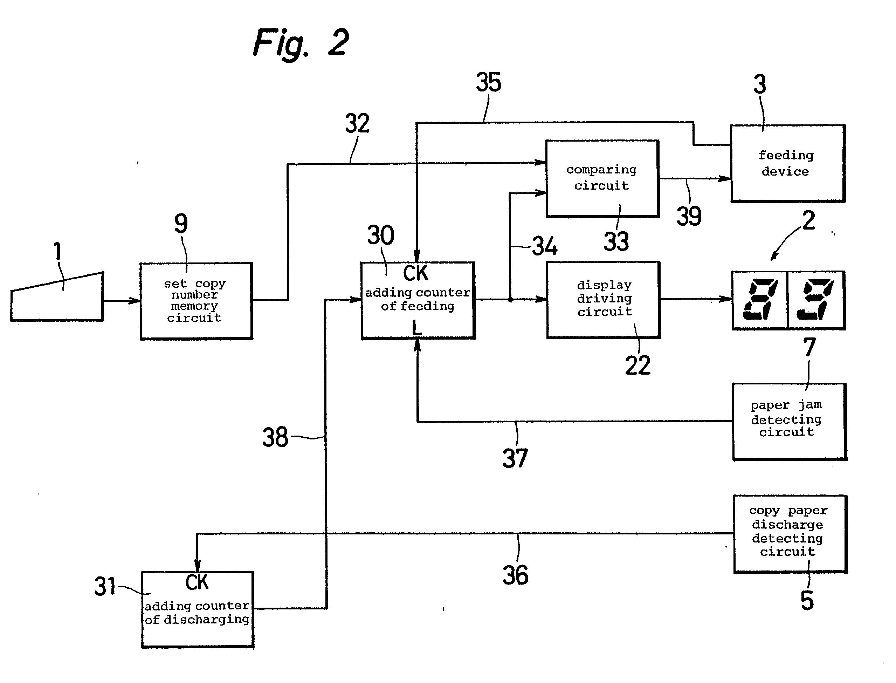

Figure 2 is a block diagram of another embodiment of the invention. The same reference numerals designate the corresponding portions shown in Figure 1. In this embodiment, an adding "feed" counter 30 and an adding "discharge" counter 31 are utilized instead of the subtracting "feed" counter 17 and the subtracting discharge counter 25 in order to count the number of copies. The information supplied from the key 1 to the set copy number memory circuit 9 is applied, via line 32, to one input terminal of a comparator circuit 33. A single pulse corresponding to the feeding of each of the copy sheets is applied via line 35 to a terminal CK of the adding "feed" counter 30. Correspondingly, for each pulse, the adding "feed" counter 30 increases the values (starting from an initial value of "0") in steps of one unit at a time, while the load terminal L receives a low level signal. The value stored in the adding "feed" counter 30 is displayed at the display station 2 via the display driving circuit 22. Therefore the value displayed at the display station 2 is added one by one each time a copy sheet is fed. The value of the adding "feed" counter 30 is applied via line 34 to the other input terminal of the comparator circuit 33. A single pulse is applied, via line 36, to the terminal CK of the adding "discharge" counter 31 whenever the discharge detecting circuit 5 detects a discharge of each copy sheet, and the value of the adding feed counter 31 is increased by one starting from numeral "0".

In the comparator circuit 33, when the input value from line 32 becomes equal to the input value from line 34, i.e. when the number of copies set by the key 1 equals the value of the adding "feed" counter 30, a low level signal is applied from the comparator circuit 33 via line 39 to the copy sheet feeding device 3. Accordingly the feeding device 3 stops feeding copy sheets and the preset number of copies will be reproduced.

Assuming that a paper jam occurs during a "multiple copy" operation as above-mentioned, a high level signal will be applied from the paper jam detecting circuit 7 via line 37 to the load terminal L of the adding feed counter 30. Since the value stored in the adding "discharge" counter 31 is applied to line 38 connected to the adding "feed" counter 30, the value of the adding "discharge" counter 31 will be transferred to, and become stored in, the adding feed counter 30 when the load terminal L receives such a high level signal. At the same time, the value from the adding discharge counter 31 is displayed at the display station 2 via the display driving circuit 22. When the paper jam occurs, the value of the adding discharge counter 31 is stored in the adding feed counter 30. Therefore, just as in the embodiment shown in Figure 1, it is not necessary to reselect the number of copies after a jammed sheet has been removed and the preset number of copies will be successively reproduced from the same original.

## Claims

1. A copy sheet counting device for copying apparatus capable of producing successively a plurality of copies corresponding to an original document comprising: memory means (1, 9) for presetting a number of copy sheets required from an original and for storing the preset number; first counting means (17) (30) for counting the copy sheets being fed, copy sheet feeding means (3) responsive to said first counting means for terminating feed of the copy sheets when the count value of the first counting means (17) (30) is equal to the said preset number; second counting means (25) (31) for counting the copy sheets being discharged after copying thereon; means (7) for detecting a paper jam; and count transfer means (8, 11—16) (33, 37, 38, 39) for causing the said first counting means (17) (30) to store the count value of the said second counting means (25) (31); characterised in that the count transfer means (8, 11—16) (33, 37, 38, 39) is directly responsive to the output from the paper jam detecting means (7), a display (2) being provided to display the count of said first counting means (17) (30).

2. A copy sheet counting device according to claim 1, characterised in that the said first counting means comprise a subtracting counter (17) for subtracting by one unit from the preset number as each copy paper sheet is fed; and in that the said second counting means comprise a subtracting counter (25) for subtracting by one unit from the preset number as each copy sheet is discharged.

3. A copy sheet counting device according to claim 1, characterised in that said first counting means comprise an adding counter (30) for increasing its count by one unit as each copy sheet is fed; in that the second counting means comprise an adding counter (31) for increasing its count by one unit as each copy sheet is discharged; and in that said means for causing the first counting means to store the count of the second counting means comprise comparator means for comparing the count of the first counter (30) with the said preselected number and for applying an output for terminating feed when the count value of the first counter (30) is equal to the said preset number.

4. A copy sheet counting device according to any preceding claim, characterised in that the means for detecting a paper jam comprises first and second switches spaced along a copy sheet transport passage, and which detects jamming when, following the first switch disposed upstream having detected a copy sheet the second switch disposed downstream does not detect a copy sheet after elapse of a predetermined time period, and when the second switch detects the continuous presence of a copy sheet over a predetermined time period.

## Revendications

1. Dispositif de comptage des feuilles de copie pour un appareil à copier capable de produire successivement une multiplicité de copies correspondant à un document original comportant: des moyens de mémoire (1, 9) pour fixer au préalable le nombre de copies exigé d'un original et pour stocker ce nombre préfixé, des premiers moyens de comptage (17; 30) pour compter les feuilles de copie amenées, des moyens d'amenée de feuilles de copie (3) sensibles aux premiers moyens de comptage pour cesser d'amener les feuilles de copie lorsque la valeur de comptage des premiers moyens de comptage (17; 30) est égale audit nombre préfixé, des deuxièmes moyens de comptage (25; 31) pour compter les feuilles de copie évacuées après copiage, des moyens (7) pour détecter un bourrage de papier, et des moyens de transfert de compte (8, 11—16; 33, 37, 38, 39) pour faire que les premiers moyens de comptage (17; 30) stockent la valeur de comptage des deuxièmes moyens de comptage (25; 31), caractérisé en ce que les moyens de transfert de compte (8, 11—16; 33, 37, 38, 39) répondent directement à la sortie des moyens de détection de bourrage de papier (7), une visualisation (2) étant prévue pour afficher le compte des premiers moyens de comptage (17; 30).

2. Dispositif de comptage des feuilles de copie selon la revendication 1, caractérisé en ce que les premiers moyens de comptage comportent un compteur-soustracteur (17) pour soustraire une unité du nombre préfixé chaque fois qu'une feuille de papier de copie est amenée, et en ce que les deuxièmes moyens de comptage comportent un compteur-soustracteur (25) pour soustraire une unité du nombre préfixé chaque fois qu'une feuille de copie est évacuée.

3. Dispositif de comptage des feuilles de copie selon la revendication 1, caractérisé en ce que les premiers moyens de comptage comportent un compteur-additionneur (30) pour accroître son compte d'une unité chaque fois qu'une feuille de copie est amenée, en ce que les deuxièmes moyens de comptage comportent un compteur-additionneur (31) accroissant son compte d'une unité chaque fois qu'une feuille de copie est évacuée, et en ce que les moyens pour faire que les premiers moyens de comptage stockent le compte des deuxièmes moyens de comptage comportent des moyens de comparateur pour comparer le compte du premier compteur (30) au nombre présélectionné et pour appliquer une sortie pour faire cesser l'amenée des feuilles lorsque la valeur de comptage du premier compteur (30) est égale audit nombre présélectionné.

4. Dispositif de comptage des feuilles de copie selon l'une quelconque des revendications précédentes, caractérisé en ce que les moyens pour détecter un bourrage de papier comportent un premier et un deuxième interrupteur espacés le long d'un passage de transport des feuilles de copie, qui détectent le bourrage quand, après que le premier interrupteur disposé en amont a détecté une feuille de copie, le deuxième interrupteur disposé en aval ne détecte pas une feuille de copie après un laps de temps prédéterminé, et lorsque le second interrupteur détecte la présence continue d'une feuille de copie sur une durée prédéterminée.

**Patentansprüche**

1. Vorrichtung zum Zählen von Kopierpapier in einem Kopiergerät, das für die aufeinanderfolgende Herstellung einer Vielzahl einem Original entsprechender Kopien geeignet ist, mit einer Speichereinrichtung (1, 9) zur Vorwahl der von einem Original herzustellenden Anzahl von Kopien und zum Speichern der vorgewählten Anzahl, einer ersten Zähleinrichtung (17) (30) zum Zählen der zugeführten Kopierpapierblätter und einer auf diese erste Zähleinrichtung ansprechenden Kopierpapierzuführeinrichtung (3) zur Beendigung der Zufuhr des Kopierpapiers, wenn der Zählwert der ersten Zähleinrichtung (17) gleich der vorgewählten Zahl ist, einer zweiten Zähleinrichtung (25) (31) zum Zählen der nach dem Kopiervorgang ausgegebenen Kopien, einer Einrichtung (7) zur Erfassung eines Papierstaus und einer Zählstandübertragungseinrichtung (8, 11—16) (33, 37, 38, 39), mittels welcher die erste Zähleinrichtung (17) (30) veranlasst wird, den Zählwert der zweiten Zähleinrichtung (25) (31) zu speichern, dadurch gekennzeichnet, dass die Zählstandübertragungseinrichtung (8, 11—16) (33, 37, 38, 39) unmittelbar auf den Ausgang der Einrichtung (7) zur Erfassung eines Papierstaus anspricht und zum Anzeigen des Zählwertes der ersten Zähleinrichtung (17) eine Anzeige (2) vorgesehen ist.

2. Vorrichtung nach Anspruch 1, dadurch gekennzeichnet, dass die erste Zähleinrichtung einen Subtraktionszähler (17) aufweist, der jedesmal von der vorgewählten Zahl eins abzieht, wenn ein Blatt Kopierpapier zugeführt wird, und dass die zweite Zähleinrichtung einen Subtraktionszähler (25) aufweist, der jedesmal von der vorgewählten Zahl eins abzieht, wenn ein Kopierpapierblatt ausgegeben wird.

3. Vorrichtung nach Anspruch 1, dadurch gekennzeichnet, dass die erste Zähleinrichtung einen Additionszähler (30) aufweist zur Erhöhung ihres Zählwertes um eins, wenn ein Blatt Kopierpapier zugeführt wird, dass die zweite Zähleinrichtung einen Additionszähler (31) aufweist zur Erhöhung ihres Zählwertes um eins, wenn ein Blatt Kopierpapier ausgegeben wird, und dass die Einrichtung, welche die erste Zähleinrichtung veranlasst, den Zählwert der zweiten Zähleinrichtung zu speichern, eine Vergleichseinrichtung zum Vergleich des Zählstandes des ersten Zählers (30) mit der vorgewählten Anzahl und zur Abgabe eines Ausgangssignals zur Beendigung der Zufuhr aufweist, wenn der Zählwert des ersten Zählers (30) gleich der vorgewählten Zahl ist.

4. Vorrichtung nach einem der vorhergehenden Ansprüche, dadurch gekennzeichnet, dass die Einrichtung zur Erfassung eines Papierstaus erste und zweite entlang eines Kopierpapierblatt-Transportdurchlasses verteilte Schalter aufweist und eine Stauung erfasst, wenn der stromaufwärts angeordnete erste Schalter ein Kopierpapier erfasst und der stromabwärts angeordnete zweite Schalter nach Ablauf einer vorgegebenen Zeitspanne kein Kopierpapier erfasst und wenn der zweite Schalter die andauernde Anwesenheit eines Blattes Kopierpapier während einer vorgegebenen Zeitspanne erfasst.

*Fig. 1*

0 025 664

## Fig. 2

**1**

**9** set copy number memory circuit

**32**

**30** CK adding counter of feeding L

**33** comparing circuit

**35**

**3** feeding device

**39**

**34**

**2**

**22** display driving circuit

**7** paper jam detecting circuit

**37**

**5** copy paper discharge detecting circuit

**36**

**38**

**31** CK adding counter of discharging